# EUROPEAN PATENT APPLICATION

(11) **EP 4 806 581 A2**
(43) Date of publication of application: **16.09.2026**
(21) Application number: 26159871.8
(22) Date of filing: 20.02.2026
(51) Int. Cl.: B23K 31/00, G06F 30/23

(54) **COMPENSATION METHOD FOR WELD-INDUCED DISTORTION, SYSTEM AND PROGRAM PRODUCT**

(30) Priority: 13.03.2025 US 202519078998
(71) Applicant: GE Vernova Technology GmbH, 5400 Baden (CH)
(72) Inventor: BELSOM, Keith Cletus, Greenville, 29615 (US)
(74) Representative: Openshaw & Co.

(57) **Abstract**

The method includes a weld process evaluation including a first welding simulation to calculate a first weld-induced distortion in an as-designed 3D component (102) and/or an as-designed member (122) to be welded to the component. A finite element analysis calculates a distorted model (170) including a pre-weld distorted 3D component (102D) and/or a pre-weld distorted member (122D) to be generated by pre-loading fixture(s) (168) to compensate for the first weld-induced distortion in the 3D component and/or member. A second welding simulation calculates a second weld-induced distortion based on the distorted model including the pre-weld distorted 3D component (102D) and/or the pre-weld distorted member (122D). Where the second weld-induced distortion results in a product within a product specification for the welded combination, the as-designed 3D component is distorted to the pre-weld distorted 3D component and/or the as-designed member is distorted to the pre-weld distorted member, and the predefined welding process is performed.

## Description

### TECHNICAL FIELD

The disclosure relates generally to component manufacture, and more particularly, to a compensation process for weld-induced distortion in a welding process. More in particular, the herein claimed invention relates to the subject matter set forth in the appended claims.

### BACKGROUND

Three-dimensional (3D) components are used in practically every industrial machine. One example complex 3D component includes a unibody of a combustor for a gas turbine system. Parts of 3D components are oftentimes welded together. One challenge with welding parts of a 3D component is that the component or the member being welded to it will distort during the welding process. More particularly, welding on 3D components, especially where they have been weakened by the addition of opening(s) therein, may create undesirable distortion that requires the post-welding structure to be resized and/or reshaped to meet geometric specifications. Resizing or reshaping a 3D component after welding can be challenging, especially where the welding results in the structure being more rigid. For example, where a member is welded to an opening in a 3D component, the welding reduces the flexibility of the member and especially reduces the flexibility of the 3D component, making any resizing or reshaping of the welded combination more difficult. In some cases, the final 3D component cannot be resized or reshaped to meet the desired product (geometric) specifications and the 3D component must be scrapped at great expense.

### BRIEF DESCRIPTION

The herein claimed invention is defined in the appended claims. Aspects, examples and features of the herein claimed invention are set forth below. All aspects, examples and features mentioned below can be combined in any technically possible way.

An aspect of the disclosure provides a method for compensating for a weld-induced distortion in a welded combination of an as-designed three-dimensional (3D) component having an opening therein and an as-designed member to be welded to the opening, the method comprising: based on a pre-defined welding process to couple the as-designed member to the opening in the as-designed 3D component, performing a weld process evaluation including: performing a first welding simulation to calculate a first weld-induced distortion in at least one of the as-designed 3D component or the as-designed member; performing a finite element analysis to calculate a distorted model including at least one of a pre-weld distorted 3D component or a pre-weld distorted member, to be generated by at least one pre-loading fixture to compensate for the first weld-induced distortion in the at least one of the as-designed 3D component or the as-designed member; and performing a second welding simulation to calculate a second weld-induced distortion based on the distorted model including the at least one of the pre-weld distorted 3D component or the pre-weld distorted member; in response to the second weld-induced distortion resulting in a product within a product specification for the welded combination of the as-designed 3D component and the as-designed member: distorting at least one of the as-designed 3D component to the pre-weld distorted 3D component or the as-designed member to the pre-weld distorted member, and performing the pre-defined welding process.

Another aspect of the disclosure includes any of the preceding aspects, and in response to the second weld-induced distortion not resulting in a product within a product specification for the welded combination of the as-designed 3D component and the as-designed member, adjusting the distorted model including the at least one of the pre-weld distorted 3D component or the pre-weld distorted member and re-performing the finite element analysis and the second welding simulation. A person skilled in the art will be readily able how the distorted model shall be adjusted to achieve promising results which meet, or are closer to, the second weld-induced distortion resulting in a product within a product specification for the welded combination of the as-designed 3D component and the as-designed member. For one non-limiting instance, it might be reasonable to assume that adjusting the distorted model in pre-weld distorting the at least one of the pre-weld distorted 3D component or the pre-weld distorted member in a direction opposite to the observed deviation from a product within a product specification for the welded combination of the as-designed 3D component and the as-designed member. However, a skilled person may also come to a different conclusion. In that way, simulations may be repeated to iteratively achieve a product within a product specification for the welded combination of the as-designed 3D component and the as-designed member.

Another aspect of the disclosure includes any of the preceding aspects, and the as-designed 3D component includes a combustor unibody for a combustor for a gas turbine system.

Another aspect of the disclosure includes any of the preceding aspects, and further comprising defining a geometry of the as-designed member based on the as-designed 3D component and the opening therein.

Another aspect of the disclosure includes any of the preceding aspects, and the as-designed member includes one of an embossment for the opening, a patch for the opening, a mount to support another part relative to the opening.

Another aspect of the disclosure includes any of the preceding aspects, and performing the first welding simulation to calculate the first weld-induced distortion includes performing the first welding simulation for a plurality of the as-designed 3D components each having the opening therein having different dimensions, and choosing the as-designed 3D component with a respective opening having a minimal first weld-induced distortion for subsequent steps.

Another aspect of the disclosure includes any of the preceding aspects, and further comprising: performing the finite element analysis to calculate the distorted model including the at least one of the pre-weld distorted 3D component or the pre-weld distorted member to be generated by each pre-loading fixture of a plurality of pre-loading fixtures to compensate for the first weld-induced distortion in the at least one of the as-designed 3D component or the as-designed member; and wherein the distorting includes using the at least one pre-loading fixture that generates the most reduction in the second weld-induced distortion.

Another aspect of the disclosure includes any of the preceding aspects, and the pre-defined welding process includes a plurality of pre-defined welding processes, and further comprising repeating the weld process evaluation for each of the plurality of welding processes, and wherein performing the pre-defined welding process includes using the pre-defined welding process that has a least amount of the second weld-induced distortion.

Another aspect of the disclosure includes a system for compensating for a weld-induced distortion in a welded combination of an as-designed three-dimensional (3D) component having an opening therein and an as-designed member to be welded to the opening, the system comprising: a memory; and a compensation system coupled to the memory and configured to process events therein according to a method that includes: based on a pre-defined welding process to couple the as-designed member to the opening in the as-designed 3D component, performing a weld process evaluation including: performing a first welding simulation to calculate a first weld-induced distortion in at least one of the as-designed 3D component or the as-designed member; performing a finite element analysis to calculate a distorted model including at least one of a pre-weld distorted 3D component or a pre-weld distorted member, to be generated by at least one pre-loading fixture to compensate for the first weld-induced distortion in the at least one of the as-designed 3D component or the as-designed member; and performing a second welding simulation to calculate a second weld-induced distortion based on the distorted model including the at least one of the pre-weld distorted 3D component or the pre-weld distorted member; in response to the second weld-induced distortion resulting in a product within a product specification for the welded combination of the as-designed 3D component and the as-designed member: distorting at least one of the as-designed 3D component to the pre-weld distorted 3D component or the as-designed member to the pre-weld distorted member using at least one at least one pre-loading fixture, and performing the pre-defined welding process using a welding system operatively coupled to the compensation system.

Another aspect of the disclosure includes any of the preceding aspects, and in response to the second weld-induced distortion not resulting in a product within a product specification for the welded combination of the as-designed 3D component and the as-designed member, the compensation system adjusts the distorted model including the at least one of the pre-weld distorted 3D component or the pre-weld distorted member and re-performing the finite element analysis and the second welding simulation.

Another aspect of the disclosure includes any of the preceding aspects, and the as-designed 3D component includes a combustor unibody for a combustor for a gas turbine system.

Another aspect of the disclosure includes any of the preceding aspects, and the compensation system defines a geometry of the as-designed member based on the as-designed 3D component and the opening therein.

Another aspect of the disclosure includes any of the preceding aspects, and the as-designed member includes one of an embossment for the opening, a patch for the opening, a mount to support another part relative to the opening.

Another aspect of the disclosure includes any of the preceding aspects, and performing the first welding simulation to calculate the first weld-induced distortion includes performing the first welding simulation for a plurality of the as-designed 3D components each having the opening therein having different dimensions, and wherein the compensation system uses the as-designed 3D component with a respective opening having a minimal first weld-induced distortion for subsequent steps.

Another aspect of the disclosure includes any of the preceding aspects, and the compensation system further: performs the finite element analysis to calculate the distorted model including the at least one of the pre-weld distorted 3D component or the pre-weld distorted member to be generated by each pre-loading fixture of a plurality of pre-loading fixtures to compensate for the first weld-induced distortion in the at least one of the as-designed 3D component or the as-designed member; and wherein the distorting includes using the at least one pre-loading fixture that generates the most reduction in the second weld-induced distortion.

Another aspect of the disclosure includes any of the preceding aspects, and the pre-defined welding process includes a plurality of pre-defined welding processes, and further comprising repeating the weld process evaluation for each of the plurality of welding processes, and wherein performing the pre-defined welding process includes using the pre-defined welding process that has a least amount of the second weld-induced distortion.

Another aspect of the disclosure includes a non-transitory computer-readable medium comprising instructions stored thereon, that when executed on a processor compensates for a weld-induced distortion in a welded combination of an as-designed three-dimensional (3D) component having an opening therein and an as-designed member to be welded to the opening, and performs the steps of: based on a pre-defined welding process to couple the as-designed member to the opening in the as-designed 3D component, performing a weld process evaluation including: performing a first welding simulation to calculate a first weld-induced distortion in at least one of the as-designed 3D component or the as-designed member; performing a finite element analysis to calculate a distorted model including at least one of a pre-weld distorted 3D component or a pre-weld distorted member, to be generated by at least one pre-loading fixture to compensate for the first weld-induced distortion in the at least one of the as-designed 3D component or the as-designed member; and performing a second welding simulation to calculate a second weld-induced distortion based on the distorted model including the at least one of the pre-weld distorted 3D component or the pre-weld distorted member; and in response to the second weld-induced distortion resulting in a product within a product specification for the welded combination of the as-designed 3D component and the as-designed member: distorting at least one of the as-designed 3D component to the pre-weld distorted 3D component or the as-designed member to the pre-weld distorted member, and performing the pre-defined welding process.

Another aspect of the disclosure includes any of the preceding aspects, and in response to the second weld-induced distortion not resulting in a product within a product specification for the welded combination of the as-designed 3D component and the as-designed member, the method further includes adjusting the distorted model including the at least one of the pre-weld distorted 3D component or the pre-weld distorted member and re-performs the finite element analysis and the second welding simulation.

Another aspect of the disclosure includes any of the preceding aspects, and performing the first welding simulation to calculate the first weld-induced distortion includes performing the first welding simulation for a plurality of the as-designed 3D components each having the opening therein having different dimensions, and choosing the as-designed 3D component with a respective opening having a minimal first weld-induced distortion for subsequent steps.

Another aspect of the disclosure includes any of the preceding aspects, and the pre-defined welding process includes a plurality of pre-defined welding processes, and further comprising repeating the weld process evaluation for each of the plurality of welding processes, and wherein performing the pre-defined welding process includes using the pre-defined welding process that has a least amount of the second weld-induced distortion.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a schematic block diagram of a computer infrastructure for a weld-induced distortion compensation system, according to embodiments of the disclosure;
FIG. 2 shows a perspective view of an illustrative as-designed three-dimensional (3D) component in the form of a combustor unibody and various as-designed members to be welded to respective openings therein, according to embodiments of the disclosure;
FIG. 3 shows a cross-sectional view of another illustrative 3D component and a member to be welded to an opening therein, according to embodiments of the disclosure;
FIG. 4 shows a flow diagram of a method for compensating for a weld-induced distortion, according to embodiments of the disclosure;
FIGS. 5A-E show schematic views of a simplified 3D component and member undergoing processing for compensating for a weld-induced distortion, according to embodiments of the disclosure; and
FIGS. 6A-E show perspective views of an illustrative pre-distorted 3D component in the form of a combustor unibody and/or pre-distorted member to be welded to an opening, according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current disclosure, it will become necessary to select certain terminology when referring to and describing relevant machine components within an illustrative application of a unibody combustion chamber for a combustor for a gas turbine system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include methods, systems and program products for compensating for a weld-induced distortion in a welded combination of an as-designed three-dimensional (3D) component having an opening therein and an as-designed member to be welded to the opening. The method performs a weld process evaluation including a first welding simulation to calculate a first weld-induced distortion in an as-designed 3D component and/or an as-designed member. A finite element analysis calculates a distorted model including a pre-weld distorted 3D component and/or a pre-weld distorted member to be generated by pre-loading fixture(s) to compensate for the first weld-induced distortion in the as-designed 3D component and/or as-designed member. A second welding simulation calculates a second weld-induced distortion based on the distorted model including the pre-weld distorted 3D component and/or the pre-weld distorted member. Where the second weld-induced distortion results in a product within a product specification for the welded combination of the as-designed 3D component and the as-designed member, the as-designed 3D component is distorted to the pre-weld distorted 3D component and/or the as-designed member is distorted to the pre-weld distorted member, and the pre-defined welding process is performed. Embodiments of the disclosure provide for welding parts of a 3D component with a computer analyzed pre-loading to compensate for distortion during the welding process. The product, i.e., a 3D component with a member welded thereto, requires minimal, if any, resizing and/or reshaping to meet product (geometric) specifications.

Embodiments of the disclosure will be described in the setting of a unibody combustor liner for a combustor of a gas turbine system. However, it is emphasized and will be apparent to those with skill in the art that the teachings of the disclosure are applicable to welding in any setting in which a 3D component having an opening therein is involved.

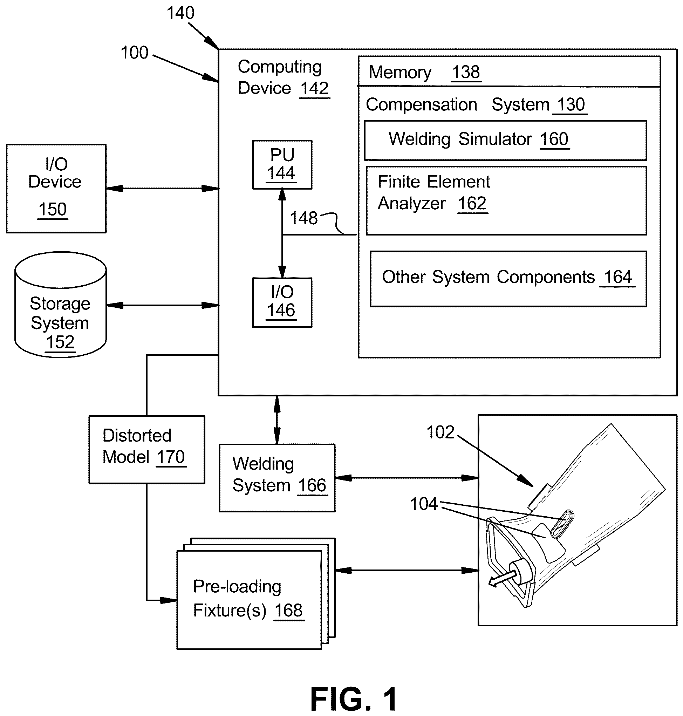

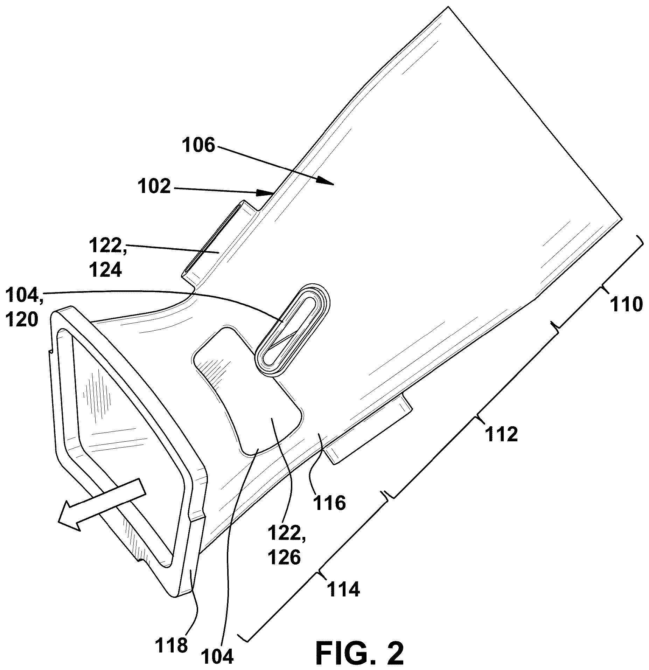

Turning to FIG. 1, a schematic view of portions of an illustrative computer system 100 for implementing a weld-induced distortion compensation method, system and/or program product is shown. As will be further described, the method is applied to a three-dimensional (3D) component 102 having one or more openings 104 therein. For purposes of description, 3D component 102 may include a combustor unibody 106 for a combustor of a gas turbine system. FIG. 2 shows an enlarged view of 3D component 102 in the form of combustor unibody 106. Combustor unibody 106 includes, for example, a cylindrical portion 110 integral with a tapered portion 112 that gradually reduces in diameter from cylindrical portion 110 towards a transition portion 114 at an end 116 of tapered portion 112. Transition portion 114 gradually transitions from a circular cross-section at tapered portion 112 to a more rectangular cross-section at an end 118 of transition portion 114.

In operation, as understood in the art, fuel and air are mixed in a fuel assembly (not shown) upstream from cylindrical portion 110 and combustion occurs in combustor unibody 106, i.e., it provides a combustion chamber for a combustor. Combustion gases pass through transition portion 114 to a gas turbine (not shown) where they rotate turbine blades to produce kinetic energy. Combustor unibody 106 may also include a plurality of openings 104 therein. A member 122 may be welded relative to opening 104. The weld-induced distortion can take any now known or later discovered form, such as but not limited to warping, twisting, extension, retraction, etc., of 3D component 102 including opening(s) 104 and/or member 122 to be welded thereto.

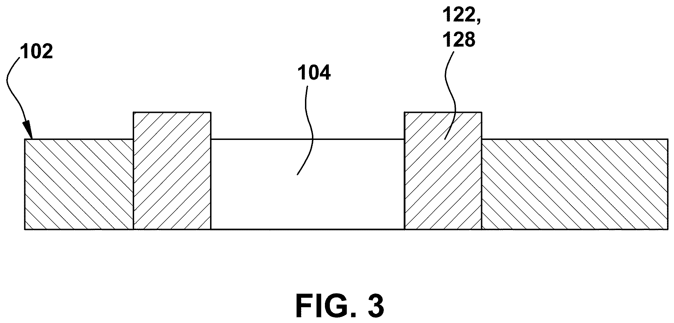

Member 122 to be welded relative to opening 104 and opening 104 can take a variety of forms. For example, as shown in FIG. 2, combustor unibody 106 may include openings 104 in the form of axial fuel stage injector (AFS) openings 120 at which fuel injectors (not shown) can be mounted via members 122 in the form of AFS injector mounts 124. Mounts 124 are welded to AFS injector openings 120 to provide additional fuel-air mixture for combustion in transition portion 114 of unibody 106. Combustor unibody 106 is also shown with an opening 104 therein that requires member 122 in the form of a patch 126 to be welded relative thereto. The patch 126 may be required to repair a part of combustor unibody 106 that requires replacement. FIG. 3 shows a cross-sectional view of another opening 104 in 3D component 102. In this example, member 122 may be an embossment 128 to be added, for example, around opening 104 to, for example, stiffen opening 104 and/or so other structure can be added to 3D component 102. Regardless of the form of opening 104 and/or member 122, due to the 3D nature of 3D component 102, 3D component 102 and/or member 122 can be susceptible to weld-induced distortion during a welding process. It will be recognized that member 122 can take a wide variety of alternative forms. In addition, while 3D component 102 is described herein as combustor unibody 106, it can include any 3D component that may be susceptible to weld-induced distortion.

Referring again to FIG. 1, system 100 includes a memory 138 including a compensation system 130 coupled to the memory and configured to process events therein according to a method, described herein. As will be appreciated by one skilled in the art, compensation system 130 according to the present disclosure may be embodied as hardware and/or software. Further, compensation system 130 according to the present disclosure may be embodied as a system, method or computer program product, i.e., a non-transitory computer-readable medium comprising instructions stored thereon, that when executed on a processor carries out the method. Accordingly, the present disclosure may take the form of an entirely hardware embodiment, an entirely software embodiment (including firmware, resident software, microcode, etc.) or an embodiment combining software and hardware aspects that may all generally be referred to herein as a "system." Furthermore, as noted, the present disclosure may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, a magnetic storage device, or a solid state storage device. Note that the computer-usable or computer-readable medium could be another suitable medium upon which the program is printed, as the program can be electronically captured, via, for instance, optical scanning of a paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, such as Java, Javascript, Python, HTML/CSS, Typescript, Smalltalk, C#, C/C++, Perl or the like. The program code may execute entirely, partly, as a stand-alone software package, on any computer system, may execute or partly or entirely on a remote computer or entirely on the remote computer or server that is operatively coupled to compensation system 130. In the latter scenario, the remote computer may be connected to compensation system 130 through any type of network, including a local area network (LAN) or a wide area network (WAN), or the connection may be made to an external computer (for example, through the Internet using an Internet Service Provider).

The present disclosure is described below with reference to flowchart illustrations and/or block diagrams of methods, systems and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine (e.g., compensation system 130), such that the instructions, which execute via the processor of the computer or other programmable data processing apparatus, create means for implementing the functions/acts specified in the flowchart and/or block diagram block or blocks. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

FIG. 1 shows an illustrative computer infrastructure 140 for compensation system 130 to perform the various process steps described herein. In particular, computer infrastructure 140 is shown including a computing device 142 that comprises compensation system 130. Computing device 142 is shown including a memory 138, a processor (PU) 144, an input/output (I/O) interface 146, and a bus 148. Further, computing device 142 is shown in communication with an external I/O device/resource 150 and a storage system 152. As is known in the art, in general, processor 144 executes computer program code, such as compensation system 130, that is stored in memory 138 and/or storage system 152. While executing computer program code, processor 144 can read and/or write data, such as operational data, to/from memory 138, storage system 152, and/or I/O interface 146. Bus 148 provides a communications link between each of the components in computing device 142. I/O interface 146 can comprise any device that enables a user to interact with computing device 142 or any device that enables computing device 142 to communicate with one or more other computing devices. Input/output devices (including but not limited to keyboards, displays, pointing devices, etc.) can be coupled to the system either directly or through intervening I/O controllers.

In any event, computing device 142 can comprise any general purpose computing article of manufacture capable of executing computer program code installed by a user (e.g., a personal computer, server, handheld device, etc.). However, it is understood that computing device 142, including compensation system 130, are only representative of various possible equivalent computing devices that may perform the various process steps of the disclosure. To this extent, in other embodiments, computing device 142 can comprise any specific purpose computing article of manufacture comprising hardware and/or computer program code for performing specific functions, any computing article of manufacture that comprises a combination of specific purpose and general purpose hardware/software, or the like. In each case, the program code and hardware can be created using standard programming and engineering techniques, respectively.

Similarly, computer infrastructure 140 is only illustrative of various types of computer infrastructures for implementing the disclosure. For example, in one embodiment, computer infrastructure 140 comprises two or more computing devices (e.g., a server cluster) that communicate over any type of wired and/or wireless communications link, such as a network, a shared memory, or the like, to perform the various process steps of the disclosure. When the communications link comprises a network, the network can comprise any combination of one or more types of networks (e.g., the Internet, a wide area network, a local area network, a virtual private network, etc.). Network adapters may also be coupled to the system to enable the data processing system to become coupled to other data processing systems or remote printers or storage devices through intervening private or public networks. Modems, cable modem and Ethernet cards are just a few of the currently available types of network adapters. Regardless, communications between the computing devices may utilize any combination of various types of transmission techniques.

As previously mentioned and discussed further below, compensation system 130 enables computing infrastructure 140 to compensate for a weld-induced distortion in a welded combination of an as-designed three-dimensional (3D) component 102 having an opening 104 therein and an as-designed member 122 to be welded to the opening 104. To this extent, compensation system 130 is shown including a welding simulator 160 configured to simulate a welding process. Welding simulator 160 may include any now known or later developed system for simulating welding of 3D component 102 and member 122. In certain embodiments, welding simulator 160 may include Simufact Forming software available from Hexagon AB, Stockholm, Sweden. Compensation system 130 may also include a finite element analyzer 162. Finite element analyzer 162 may include any now known or later developed system for simulating how a structure will behave under real-world situations such as but not limited to stress, fluid flow, cold/heat and/or vibration, by segmenting the structure into small elements and simulating the behavior of each element to simulate the overall response of the complete structure. In certain embodiments, finite element analyzer 162 may include any appropriate Ansys^{®} simulation software available from Ansys, Inc.^{®}, Canonsburg, PA, USA. Compensation system 130 may also include other system components 164 capable of operating welding system 166 other than as expressly described herein. Other system components 164 may include, for example, any now known or later developed ancillary welding control sub-systems capable of interacting with welding system 166, and/or any now known or later developed ancillary pre-loading fixture control sub-systems capable of interacting with at least one pre-loading fixture 168. Operation of each of these systems is discussed further below, where relevant to the teachings of the disclosure. It is understood that some of the various systems shown in FIG. 1 can be implemented independently, combined, and/or stored in memory for one or more separate computing devices that are included in computer infrastructure 142.

Welding system 166 may include any now known or later developed welding equipment capable of operation per instructions from compensation system 130. Welding system 166 may include any type of welding appropriate for the materials being used. For example, a non-exhaustive list of welding system 166 types may include: gas metal arc welding, shielded metal arc welding, plasma arc welding, metal inert gas welding, and tungsten inert gas welding.

Pre-loading fixture(s) 168 may include any now known or later developed tooling and/or fixtures capable of elastically or plastically distorting 3D component 102 and/or member 122 per instructions from compensation system 130. Pre-loading fixture(s) 168 can include any now known or later developed actuators, e.g., pneumatic, hydraulic, electric or a combination thereof, having any variety of contact elements capable of providing the desired distortion. As will be recognized, the form of pre-loading fixture(s) 168 used can vary depending on the form of 3D component and/or member 122. It will be recognized that pre-loading fixture(s) 168 may apply a force that temporarily distorts and/or permanent distorts 3D component 102 and/or member 122. As the types of pre-loading fixture(s) 168 are otherwise known in the field, no further details are warranted for understanding of the disclosure.

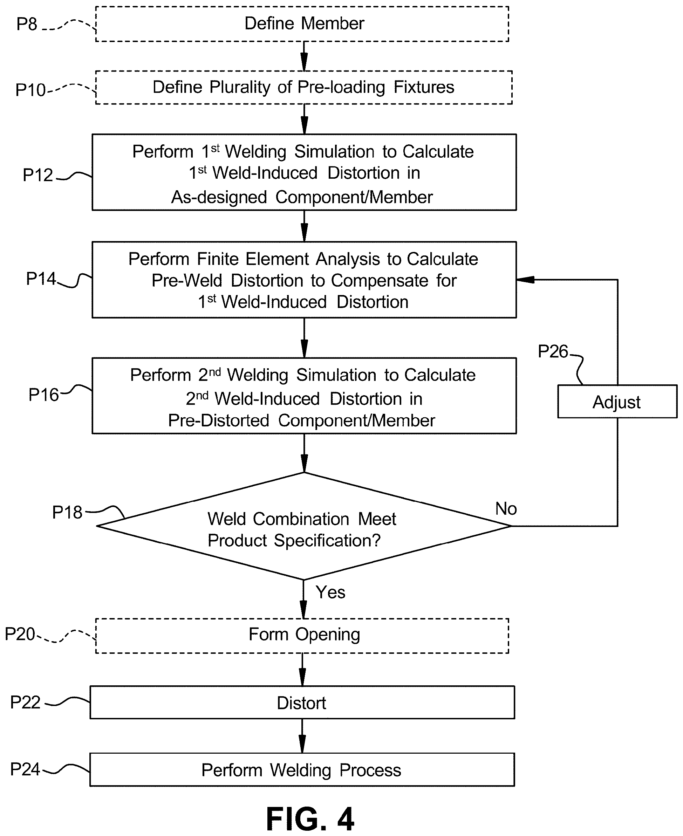

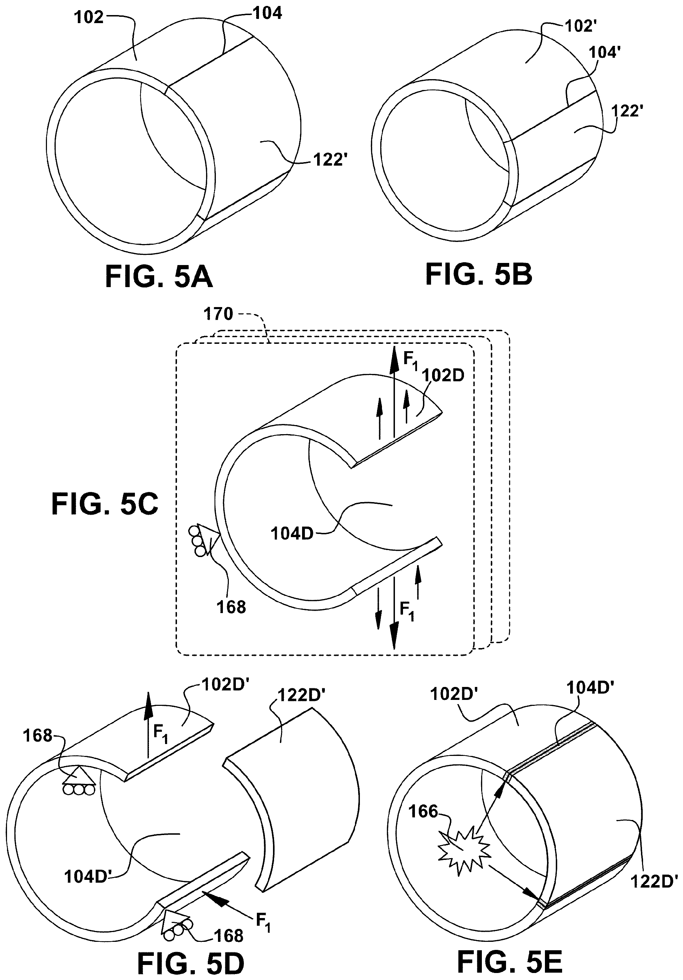

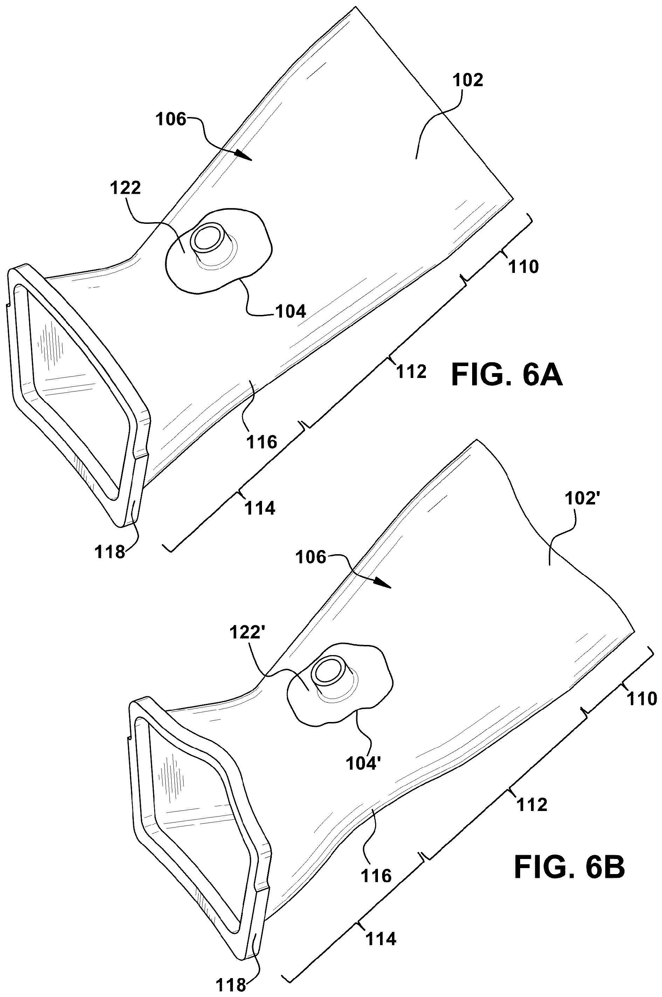

FIG. 4 shows a flow diagram for describing the computer-implemented method for compensating for a weld-induced distortion using compensation system 130 (FIG. 1) within the illustrative application of 3D component 102 (FIGS. 1-3). FIGS. 5A-E show schematic views of a simplified 3D component 102 and member 122 to be welded relative to opening 104 in 3D component 102 for purposes of illustration during description of the method of FIG. 4. It is emphasized that the structures in FIGS. 5A-E are simplified for description purposes. In contrast, as noted, FIG. 2 shows a perspective view of an illustrative as-designed 3D component 102 in the form of combustor unibody 106 and various as-designed members 122 to be welded to various respective openings 104 therein. FIG. 6A-E show 3D component 102 and member 122 to be welded relative to opening 104 in 3D component 102 shown in FIG. 2 undergoing a method according to embodiments of the disclosure. As shown in FIGS. 2 and 6A-E, 3D component 102, opening 104 and/or member 122 can have very complex three-dimensional shapes and/or dimensions compared to the simplified, schematic versions of FIGS. 5A-E.

With reference to FIGS. 1-6E, a computer-implemented method to compensate for a weld-induced distortion in a welded combination of an as-designed 3D component 102 having opening 104 therein and as-designed member 122 to be welded to opening 104 will now be described. As will be explained, parts of the process may iterate to continually make corrections beyond a first pass.

Prior to the method, a pre-defined welding process to couple as-designed member 122 to opening 104 in as-designed 3D component 102 is created. The pre-defined welding process may include any now known or later developed welding process. The pre-defined welding process may include any number of parameters of a welding process including but not limited to: weld passes to be completed, weld speed(s), material feed rate(s), material(s) involved, cool down rate(s), bead size(s), amperage(s) and/or wattage(s). In certain embodiments, a single pre-defined welding process is evaluated according to the weld process evaluation described herein. However, in certain embodiments, a plurality of pre-defined welding processes may be defined by a user, and the weld process evaluation described herein may be repeated for each of the plurality of welding processes. In this case, as will be described further herein, when a selected pre-defined welding process of the plurality of pre-defined welding processes is performed, it may include using the pre-defined welding process that has the least amount of a weld-induced distortion.

As shown in FIGS. 5A and 6A, the term "as-designed" as applied to 3D component 102 or member 122 indicates any variety of shape and/or dimensional characteristics of 3D component 102 or member 122, respectively, based on the original intent for those parts. The pre-defined welding process is intended to weld as-designed 3D component 102 and as-designed member 122 to achieve a product including a welded combination of 3D component 102 and member 122 that meets a product specification. The "product specification" can include any now known or later developed characteristics of the product including but not limited to shape and/or dimensions, i.e., geometry. The product specification may include any variety of characteristic values, i.e., discrete values and/or ranges of values, that the product must meet in order for the product to be acceptable for its intended use.

As shown in FIGS. 4, 5A and 6A, in an optional process P8, as-designed member 122 is defined. FIGS. 5A and 6A show an illustrative as-designed member 122 configured to be welded into as-designed component 122 having opening 104 therein. This step may include, among other things, defining a geometry of as-designed member 122 based on as-designed 3D component 102 and opening 104 therein to be welded to as-designed member 122. The defining may include but is not limited to identifying the type of member 122, the material, the shape and/or dimensions of the member 122, and inputting the information to compensation system 130. This step may be manually implemented or automated based on, for example, characteristics of opening 104 such as but not limited to its shape, dimensions, and/or purpose.

In optional process P10, a plurality of pre-loading fixtures 168 may be defined. The different pre-loading fixtures 168 may differ in terms of, for example, distortion capabilities in terms of force, direction of application, and/or contact points. Pre-loading fixtures 168 may be use any motive force, e.g., hydraulics, pneumatics and/or electricity. As will be described, the different pre-loading fixtures 168 can be evaluated as part of the welding evaluation process in later steps.

In processes P12-P18 and P26, compensation system 130 performs a weld process evaluation, e.g., for each pre-defined weld process.

In process P12, compensation system 130 and, more particularly, welding simulator 160 thereof, performs a first welding simulation to calculate a first weld-induced distortion in as-designed 3D component 102 and/or as-designed member 122. FIGS. 5B and 6B show an illustration of the results of the first welding simulation. The first weld-induced distortion in as-designed 3D component 102' and/or as-designed member 122' may be presented in any now known or later developed manner such as but not limited to expected amount warping, twisting, extension, retraction, shrinkage, etc., of 3D component 102' including opening(s) 104' and/or member 122'. The simulation may vary depending on, for example, 3D component 102, opening 104 and/or member 122 shape and/or dimensions; 3D component 102 and/or member 122 materials (typically but not always the same material); and characteristics of the pre-defined welding process such as but not limited to: weld passes to be completed, weld speed(s), material feed rate(s), material(s) involved, cool down rate(s), bead size(s), amperage(s) and/or wattage(s). As shown in FIGS. 5B and 6B, the first welding simulation indicates the distortion in 3D component 102', opening 104' and/or member 122' that would result from performing the predefined welding process on as-designed 3D component 102 (FIGS. 5A, 6A) and/or as-designed member 122 (FIGS. 5A, 6A). In the example shown, 3D component 102' warps and/or twists at opening 104' and/or member 122' retracts from its shape/dimension in FIGS. 5A, 6A. It is understood that the nature of the distortion can vary for different settings.

Process P12 may optionally include performing the first welding simulation for a plurality of as-designed 3D components 102 each having an opening 104 therein having different dimensions. The different dimensions could be based on, for example, thinning the material and/or changing the interface geometry between member 122, 3D component 102 and/or opening 104 to change the amount and/or shape of the distortion, along with other methods. In this case, process P12 may also include choosing the as-designed 3D component 102 with a respective opening 104 having a minimal first weld-induced distortion for subsequent steps. In this manner, the best as-designed 3D components 102 and opening 104 can be identified that is expected to meet the product specification after the welding.

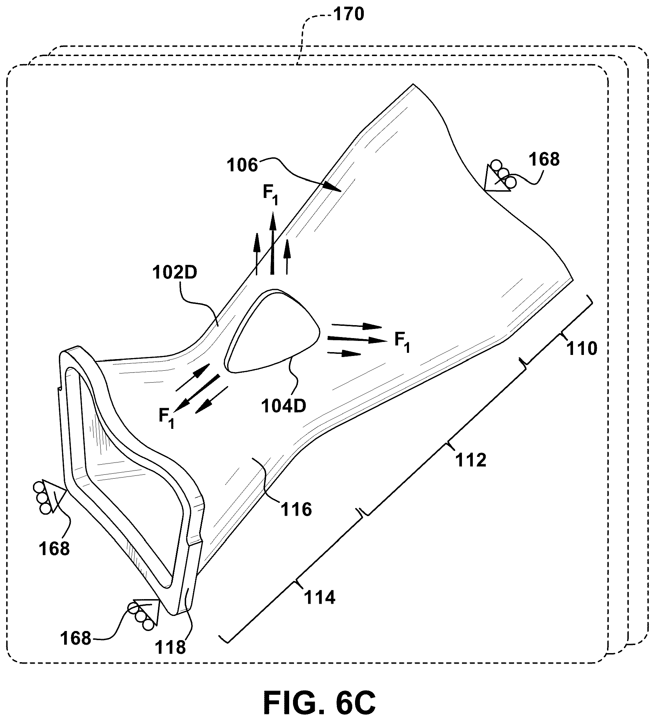

In process P14, as shown in FIGS. 1, 5C and 6C, compensation system 130 and, more particularly, finite element analyzer 162 thereof, performs a finite element analysis (FEA) to calculate a distorted model 170 including at least one of a pre-weld distorted 3D component 102D or a pre-weld distorted member 122D, to be generated by at least one pre-loading fixture 168 to compensate for the first weld-induced distortion in as-designed 3D component 102 and/or as-designed member 122. That is, distorted model 170 includes pre-weld distorted 3D component 102D and/or pre-weld distorted member 122D to be generated by pre-loading fixture(s) 168 to distort the component or member in a way that compensates for the future weld-induced distortion in as-designed 3D component 102 and/or as-designed member 122. Pre-loading fixture(s) 168 is/are designed by considering the distorted shape results from process P12, specifically, as provided by welding simulator 160. The FEA results are used to design pre-loading fixture(s) 168 that will distort 3D component 102, opening 104, and/or member 122. Distorted model 170 predicts the elastic and plastic deformations from pre-loading fixture(s) 168 applied to as-designed 3D component 102 and/or as-designed member 122. As shown in FIGS. 5C and 6C, distorted model 170 includes pre-weld distorted 3D component 102D (including perhaps pre-weld distorted opening 104D) and/or pre-weld distorted member 122D that is/are forcibly changed by pre-load fixture(s) 168 in, for example, shape, dimensions or other characteristics, to compensate for the anticipated first weld-distortion shown in FIGS. 5B and 6B. While two pre-load fixtures 168 are shown schematically in FIGS. 5C and 6C, any now known or later developed pre-load fixture(s) 168 may be used to achieve the required pre-weld distortions.

Where more than one pre-loading fixture 168 is defined (see numerous overlaid force F₁ arrows in FIGS. 5C and 6C indicating different options), process P14 may include performing the FEA to calculate distorted model 170 including pre-weld distorted 3D component 102D and/or pre-weld distorted member 122D to be generated by each pre-loading fixture 168 to compensate for the first weld-induced distortion (FIGS. 5B, 6B) in as-designed 3D component 102 and/or as-designed member 122. The result is a plurality of distorted models 170 - see layered distorted models 170 in FIGS. 5C and 6C. The method may include using pre-loading fixture(s) 168 that generate the most reduction in the first weld-induced distortion (FIGS. 5B, 6B).

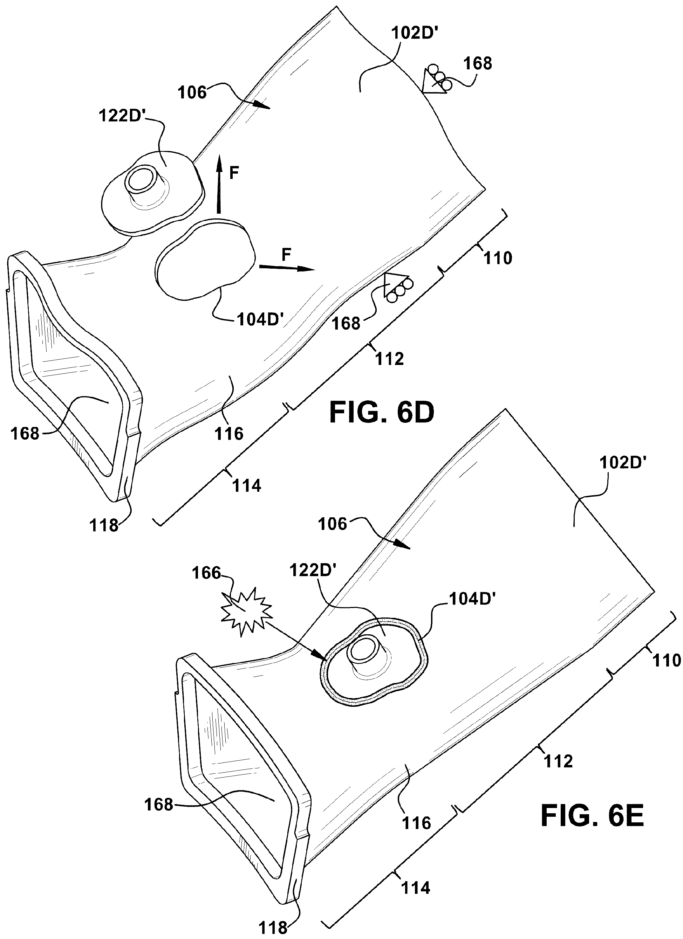

In process P16, compensation system 130 and, more particularly, welding simulator 160 thereof, performs a second welding simulation to calculate a second weld-induced distortion, as shown in FIGS. 5D and 6D, based on distorted model(s) 170 (FIGS. 5C, 6C) including pre-weld distorted 3D component 102D or pre-weld distorted member 122D. As shown in FIGS. 5D and 6D, the second welding simulation indicates the distortion in pre-weld distorted 3D component 102D' (including opening 104D) and/or pre-weld distorted member 122D' that would result from performing the predefined welding process on pre-weld distorted 3D component 102D (FIGS. 5C, 6C) and/or pre-weld distorted member 122D (FIGS. 5C, 6C). In the example shown, 3D component 102D' is slightly warped and/or twisted at opening 104D' and/or member 122D' is slightly enlarged from its shape/dimension in FIGS. 5A and 6A.

In process P18, compensation system 130 determines whether the second weld-induced distortion (FIGS. 5D, 6D) results in a product within a product specification for the welded combination of as-designed 3D component 102 (FIGS. 5A, 6A) and as-designed member 122 (FIGS. 5A, 6A). Compensation system 130 may determine whether the second welded distortion is within the product specification in any now known or later developed fashion. More particularly, compensation system 130 may determine whether any desired characteristics are at a discrete value and/or within desired ranges of values, that the product must meet in order for the product to be acceptable for its intended use.

In response to the second weld-induced distortion resulting in a product within a product specification for the welded combination of as-designed 3D component 102 (FIGS. 5A, 6A) and the as-designed member 122 (FIGS. 5A, 6A), i.e., YES at process P18, processes P20-P22 occur.

In optional process P20, opening 104 may be formed in as-designed 3D component 102, if not already formed.

In process P22, as-designed 3D component 102 (FIGS. 5A, 6A) is distorted to pre-weld distorted 3D component 102D' (FIGS. 5D-E, 6D-E) and/or as-designed member 122 is distorted to pre-weld distorted member 122D' (FIGS. 5D-E, 6D-E). That is, process P22 includes distorting at least one of as-designed 3D component 102 (FIGS. 5A, 6A) to pre-weld distorted 3D component 102D' (FIGS. 5D-E, 6D-E) or as-designed member 122 (FIGS. 5A, 6A) to pre-weld distorted member 122D' (FIGS. 5D-E, 6D-E). 3D component 102 and/or member 122 are distorted according to one of the distortion models 170 (FIGS. 5C, 6C), i.e., using pre-loading fixture(s) 168. FIGS. 5D and 6D show schematic views of the distortion model 170 being applied by pre-loading fixture(s) 168.

Where more than one pre-loading fixture 168 is defined, as noted relative to FIGS. 5C and 6C, process P14 may include performing the FEA to calculate distorted model 170 (FIGS. 5C, 6C) including pre-weld distorted 3D component 102D and/or pre-weld distorted member 122D to be generated by each pre-loading fixture 168 to compensate for the first weld-induced distortion (FIGS. 5B, 6B) in the as-designed 3D component 102 and/or as-designed member 122. In this case, the distortion at process P22 may include using pre-loading fixture(s) 168 that generates the most reduction in the first weld-induced distortion.

In process P24, the pre-defined welding process is performed using welding system 166. FIGS. 5E and 6E shows the post-welding structure. That is, with pre-weld distorted 3D component 102D' and/or pre-weld distorted member 122D' is distorted according to distortion model 170 (FIGS. 5C, 6C), and the pre-defined welding process is performed by welding system 166.

In response to the second weld-induced distortion (FIGS. 5C, 6C) not resulting in a product within a product specification for the welded combination of as-designed 3D component 102 and as-designed member 122, i.e., NO at process P18, in process P26, compensation system 130 adjusts distorted model 170 (FIGS. 5C, 6C) including pre-weld distorted 3D component 102D and/or pre-weld distorted member 122D, and finite element analyzer 162 re-performs the FEA at process P14 and welding simulator 160 re-performs the second welding simulation at process P16. The adjustment may include any now known or later developed adjustment to result in a product that is within the product specification for the welded combination of as-designed 3D component 102 and as-designed member 122. The process may then progress from process P18, as previously described herein.

Embodiments of the disclosure provide various technical and commercial advantages, examples of which are discussed herein. As described herein, the disclosure provides for welding parts of a 3D component with a computer-analyzed pre-loading to compensate for distortion during the welding process. The product, i.e., 3D component with member welded thereto, requires minimal, if any, resizing and/or reshaping to meet product geometric specifications.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the claimed invention. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A method for compensating for a weld-induced distortion in a welded combination of an as-designed three-dimensional 3D component (102, 102') having an opening (104) therein and an as-designed member (122) to be welded to the opening, the method comprising:
based on a pre-defined welding process to couple the as-designed member to the opening in the as-designed 3D component, performing a weld process evaluation including:
performing a first welding simulation to calculate a first weld-induced distortion in at least one of the as-designed 3D component or the as-designed member;
performing a finite element analysis to calculate a distorted model (170) including at least one of a pre-weld distorted 3D component (102D, 102D') or a pre-weld distorted member (122D, 122D'), to be generated by at least one pre-loading fixture (168) to compensate for the first weld-induced distortion in the at least one of the as-designed 3D component or the as-designed member; and
performing a second welding simulation to calculate a second weld-induced distortion based on the distorted model (170) including the at least one of the pre-weld distorted 3D component (102D, 102D') or the pre-weld distorted member (122D, 122D'); and
in response to the second weld-induced distortion resulting in a product within a product specification for the welded combination of the as-designed 3D component and the as-designed member:
distorting at least one of the as-designed 3D component to the pre-weld distorted 3D component or the as-designed member to the pre-weld distorted member, and
performing the pre-defined welding process.

2. The method of claim 1, wherein in response to the second weld-induced distortion not resulting in a product within a product specification for the welded combination of the as-designed 3D component and the as-designed member, adjusting the distorted model including the at least one of the pre-weld distorted 3D component or the pre-weld distorted member and re-performing the finite element analysis and the second welding simulation.

3. The method of claim 1, wherein the as-designed 3D component includes a combustor unibody (106) for a combustor for a gas turbine system.

4. The method of any preceding claim, further comprising defining a geometry of the as-designed member (122) based on the as-designed 3D component (102) and the opening (104) therein.

5. The method of any preceding claim, wherein the as-designed member (122) includes one of an embossment (128) for the opening (104), a patch (126) for the opening (104), or a mount to support another part relative to the opening.

6. The method of any preceding claim, wherein performing the first welding simulation to calculate the first weld-induced distortion includes performing the first welding simulation for a plurality of the as-designed 3D components each having the opening therein having different dimensions, and choosing the as-designed 3D component with a respective opening having a minimal first weld-induced distortion for subsequent steps.

7. The method of any preceding claim, further comprising:
performing the finite element analysis to calculate the distorted model (170) including the at least one of the pre-weld distorted 3D component (102D, 102D') or the pre-weld distorted member (122D, 122D') to be generated by each pre-loading fixture (168) of a plurality of pre-loading fixtures to compensate for the first weld-induced distortion in the at least one of the as-designed 3D component or the as-designed member; and
wherein the distorting includes using the at least one pre-loading fixture (168) that generates the most reduction in the second weld-induced distortion.

8. The method of any preceding claim, wherein the pre-defined welding process includes a plurality of pre-defined welding processes, and further comprising repeating the weld process evaluation for each of the plurality of welding processes, and wherein performing the pre-defined welding process includes using the pre-defined welding process that has a least amount of the second weld-induced distortion.

9. A system for compensating for a weld-induced distortion in a welded combination of an as-designed three-dimensional (3D) component (102, 102') having an opening (104) therein and an as-designed member (122) to be welded to the opening, the system comprising:
a memory (138); and
a compensation system (130) coupled to the memory and configured to process events therein according to a method of any preceding claim:
wherein performing the pre-defined welding process comprises performing the pre-defined welding process using a welding system (166) operatively coupled to the compensation system.

10. A non-transitory computer-readable medium comprising instructions stored thereon that, when executed on a processor (144), compensates for a weld-induced distortion in a welded combination of an as-designed three-dimensional (3D) component (102, 102') having an opening (104) therein and an as-designed member (122) to be welded to the opening, and performs a method according to any of claims 1 through 8.
